# EUROPEAN PATENT APPLICATION

(11) **EP 4 572 418 A1**
(43) Date of publication of application: **18.06.2025**
(21) Application number: 23852013.4
(22) Date of filing: 11.08.2023
(51) Int. Cl.: H04W 52/02

(54) **SIGNAL PROCESSING METHOD, CHANNEL PROCESSING METHOD, AND COMMUNICATION APPARATUS**

(30) Priority: 12.08.2022 CN 202210970207
(71) Applicant: Spreadtrum Communications (Shanghai) Co., Ltd., Shanghai 201203 (CN)
(72) Inventor: ZHOU, Huayu, Shanghai 201203 (CN); LEI, Zhenzhu, Shanghai 201203 (CN); PAN, Zhengang, Shanghai 201203 (CN)
(74) Representative: Mewburn Ellis LLP
(86) International application number: PCT/CN2023/112716
(87) International publication number: WO 2024/032793

(57) **Abstract**

The disclosure provides a method for signal processing, a method for channel processing, and a communication apparatus, which can save the power consumption of a terminal device. The method for signal processing includes the following. Validity of a reference signal is determined, such that the terminal device processes a valid reference signal, thereby saving the power consumption. A transmission periodicity of the reference signal is determined, such that the terminal device determines reference signals to be processed, thereby saving the power consumption. The method for channel processing includes the following. Validity of a physical downlink shared channel (PDSCH) is determined, such that the terminal device processes a valid PDSCH, thereby saving the power consumption. A transmission periodicity of the PDSCH is determined, such that the terminal device determines PDSCHs to be processed, thereby saving the power consumption.

## Description

This application claims priority to Chinese Patent Application No. 202210970207.6, filed August 12, 2022, and entitled "METHOD FOR SIGNAL PROCESSING, METHOD FOR CHANNEL PROCESSING, AND COMMUNICATION APPARATUS", the entire disclosure of which is incorporated herein by reference.

### TECHNICAL FIELD

The present disclosure relates to the field of communication technology, and in particular, to a method for signal processing, a method for channel processing, and a communication apparatus.

### BACKGROUND

The discontinuous reception (DRX) mechanism allows a user equipment (UE) to periodically enter a sleep state, in the sleep state, the UE does not monitor the physical downlink control channel (PDCCH). The UE can wake up from the sleep state when the UE needs to monitor the PDCCH, thereby saving the power consumption of the UE. The DRX mechanism with the UE in a connected mode can be referred to as a connected-mode discontinuous reception (C-DRX) mechanism. Under the C-DRX mechanism, the UE monitors the PDCCH during active time. The active time is the duration during which certain timers are running, such as a duration timer (drx-on duration timer), an inactivity timer (drx-inactivity timer), and so on.

Furthermore, under the C-DRX mechanism, the UE can measure or receive certain types of channel state information-reference signals (CSI-RS) during the active time to further save the power consumption of the UE. Certain types of CSI-RS may include CSI-RS for channel state information (CSI) acquisition, or CSI-RS for mobility management, and so on. However, a base station may still transmit some signals and/or channels outside the active time, accordingly, the UE will receive and process some signals and/or channels outside the active time, which affects the power consumption of the UE.

### SUMMARY

Embodiments of the disclosure provide a method for signal processing, a method for channel processing, and a communication apparatus, which can reduce power consumption of a terminal device.

In a first aspect, the disclosure provides a method for signal processing. The method includes the following. Validity of a reference signal is determined, or a transmission periodicity of the reference signal is determined.

It may be seen that, by determining the validity of the reference signal, a valid reference signal is processed while an invalid reference signal is not processed, thereby saving the power consumption. By determining the transmission periodicity of the reference signal, reference signals to be processed are determined, thereby saving the power consumption.

In a possible embodiment, the validity of the reference signal is determined as follows. A reference signal after a first time interval is determined to be valid, where a start time of the first time interval is a start-up time of a drx-on duration timer, and a duration of the first time interval is a preset duration, thereby reducing the interval between the valid reference signal and the start-up time of the drx-on duration timer.

When the reference signal is a synchronization signal/physical broadcast channel block (SSB), the SSB after the first time interval is determined to be valid, which allows the terminal device to perform signal synchronization promptly. When the reference signal is a channel state information reference signal (CSI-RS), the CSI-RS after the first time interval is determined to be valid, which allows the terminal device to perform time-frequency tracking and/or channel measurement promptly. When the reference signal is a positioning reference signal (PRS), the PRS after the first time interval is determined to be valid, which allows the terminal device to perform positioning-related measurement promptly.

The reference signal is a non-periodic reference signal.

In a possible embodiment, the validity of the reference signal is determined as follows. A reference signal in an active time is determined to be valid, and a reference signal outside the active time is determined to be invalid, such that the terminal device processes reference signals in the active time and skips processing reference signals outside the active time, thereby saving the power consumption. The active time is a duration during which a physical downlink control channel (PDCCH) can be monitored.

**In** a possible embodiment, the transmission periodicity of the reference signal is determined as follows. A transmission periodicity of a reference signal in an active time is determined as a first period. A transmission periodicity of a reference signal outside the active time is determined as a second period. Generally, the second period is longer than the first period so as to achieve power saving gains. The terminal device processes reference signals in the active time and skips processing reference signals outside the active time, thereby saving the power consumption.

**In** a possible embodiment, the validity of the reference signal is determined or the transmission periodicity of the reference signal is determined as follows. When receiving a wake-up indication indicating not to wake up, a reference signal in a duration indicated by a drx-on duration timer is determined to be valid, or a transmission periodicity of the reference signal in the duration indicated by the drx-on duration timer is determined as a first period. That is, even if the drx-on duration timer is indicated not to wake up, the reference signal in the duration indicated by the drx-on duration timer remain valid or the transmission periodicity is maintained as the first period.

In a possible embodiment, the validity of the reference signal is determined or the transmission periodicity of the reference signal is determined as follows. When not receiving a wake-up indication and being configured with a first high-level parameter with a value being a first value, a reference signal in a duration indicated by a drx-on duration timer is determined to be valid, or a transmission periodicity of the reference signal in the duration indicated by the drx-on duration timer is determined as a first period. In this way, the validity or transmission periodicity of the reference signal in different scenarios may be controlled through the high-level parameter to further save the power consumption.

In a possible embodiment, the validity of the reference signal is determined as follows. A reference signal in a first time window is determined to be valid and a reference signal outside the first time window is determined to be invalid, thereby increasing flexibility in determining the validity of the reference signal.

In a possible embodiment, the transmission periodicity of the reference signal is determined as follows. A transmission periodicity of a reference signal in a first time window is determined as a first period, and a transmission periodicity of a reference signal outside the first time window is determined as a second period, thereby increasing flexibility in determining the transmission periodicity of the reference signal. Generally, the second period is longer than the first period so as to achieve power saving gains.

In a possible embodiment, a period and an offset of the first time window are indicated by a second high-level parameter, such that a network device can flexibly configure the period and the offset of the first time window through high-level parameters.

In a possible embodiment, the reference signal is a periodic reference signal, which can reduce complexity of a terminal device.

In a possible embodiment, the reference signal is an SSB, a CSI-RS, or a PRS.

Further, the CSI-RS includes a tracking reference signal (TRS).

In a second aspect, the disclosure provides a method for channel processing. The method may include the following. Validity of a physical downlink shared channel (PDSCH) is determined, or a transmission periodicity of the PDSCH is determined.

It may be seen that, by determining the validity of the PDSCH, a valid PDSCH is processed while an invalid PDSCH is not processed, thereby saving the power consumption. By determining the transmission periodicity of the PDSCH, PDSCHs to be processed are determined, thereby saving the power consumption.

The PDSCH may be a semi-persistent scheduling (SPS) PDSCH.

In a possible embodiment, the validity of the PDSCH is determined as follows. A PDSCH in an active time is determined to be valid, and a PDSCH outside the active time is determined to be invalid, such that the terminal device processes PDSCHs in the active time and skips processing PDSCHs outside the active time, thereby saving the power consumption. The active time is a time period during which a PDCCH can be monitored.

In a possible embodiment, the transmission periodicity of the PDSCH is determined as follows. A transmission periodicity of a PDSCH in an active time is determined as a third period. A transmission periodicity of a PDSCH outside the active time is determined as a fourth period. Generally, the fourth period is longer than the third period so as to achieve power saving gains. The terminal device processes PDSCHs in the active time and skips processing PDSCHs outside the active time, thereby saving the power consumption.

In a possible embodiment, the validity of the PDSCH is determined as follows. A PDSCH in a second time window is determined to be valid and a PDSCH outside the second time window is determined to be invalid, thereby increasing flexibility in determining the validity of the PDSCH.

In a possible embodiment, the transmission periodicity of the PDSCH is determined as follows. A transmission periodicity of a PDSCH in a second time window is determined as a third period, and a transmission periodicity of a PDSCH outside the second time window is determined as a fourth period, thereby increasing flexibility in determining the transmission periodicity of the PDSCH. Generally, the fourth period is longer than the third period so as to achieve power saving gains.

In a possible embodiment, a period and an offset of the second time window are indicated by a third high-level parameter, such that a network device can flexibly configure the period and the offset of the second time window through high-level parameters.

Optionally, the method provided in any one of the first aspect or the second aspect may be performed by a terminal device, or by a module in the terminal device, such as a chip in the terminal device. Alternatively, the method provided in any one of the first aspect or the second aspect may be performed by a network device, or by a module in the network device, such as a chip in the network device.

For example, the network device determines validity of a reference signal or determines a transmission periodicity of the reference signal. By determining the validity of the reference signal, the network device transmits valid reference signals and skips transmitting invalid reference signals, thereby reducing the power consumption of the network device. By determining the transmission periodicity of the reference signal, the network device transmits reference signals according to the transmission periodicity, thereby reducing the power consumption.

For example, the network device determines validity of a PDSCH or determines a transmission periodicity of the PDSCH. By determining validity of the PDSCH, the network device transmits valid PDSCHs and skips transmitting invalid PDSCHs, thereby reducing the power consumption of the network device. By determining the transmission periodicity of the PDSCH, the network device transmits PDSCHs according to the transmission periodicity, thereby reducing the power consumption.

In a third aspect, the disclosure provides a communication apparatus. The apparatus includes a processing unit. In one design, the processing unit is configured to determine validity of a reference signal or determine a transmission periodicity of the reference signal. In another design, the processing unit is configured to determine validity of a PDSCH or determine a transmission periodicity of the PDSCH.

In a fourth aspect, the disclosure provides a communication apparatus. The apparatus includes a processor, a memory, and a computer program or instructions stored in the memory, wherein the processor is configured to execute the computer program or the instructions to implement the method according to the first aspect and any possible embodiment thereof, or the method according to the second aspect and any possible embodiment thereof.

In a fifth aspect, the disclosure provides a chip. In an embodiment, the chip is configured to determine validity of a reference signal or determine a transmission periodicity of the reference signal. In another embodiment, the chip is configured to determine validity of a PDSCH or determine a transmission periodicity of the PDSCH.

In a sixth aspect, the disclosure provides a computer-readable storage medium. The computer-readable storage medium stores computer-readable instructions which, when executed by a computer, cause a communication apparatus to perform the method according to the first aspect and any possible embodiment thereof, or the method according to the second aspect and any possible embodiment thereof.

In a seventh aspect, the disclosure provides a computer program or a computer program product. The computer program or the computer program product includes code or instructions which, when executed by a computer, cause the computer to perform the method according to the first aspect and any possible embodiment thereof, or the method according to the second aspect and any possible embodiment thereof.

In an eighth aspect, the disclosure provides a chip module. The chip module includes a communication module, a power module, a storage module, and a chip. The power module is configured to supply power to the chip module. The storage module is configured to store data and instructions. The communication module is configured for internal communication of the chip module or communication between the chip module and external devices. The chip is configured to execute the method according to the first aspect and any possible embodiment thereof, or the method according to the second aspect and any possible embodiment thereof.

### BRIEF DESCRIPTION OF THE DRAWINGS

FIG. 1 is a schematic diagram of an architecture of a communication system provided in the disclosure.
FIG. 2 is a schematic flow chart of a method for signal processing provided in the disclosure.
FIG. 3 is a schematic flow chart of another method for signal processing provided in the disclosure.
FIG. 4 is a schematic flow chart of a method for channel processing provided in an embodiment of the disclosure.
FIG. 5 is a schematic flow chart of another method for channel processing provided in an embodiment of the disclosure.
FIG. 6 is a schematic structural view of a communication apparatus provided in the disclosure.
FIG. 7 is a schematic structural view of another communication apparatus provided in the disclosure.
FIG. 8 is a schematic structural view of a chip module provided in an embodiment of the disclosure.

### DETAILED DESCRIPTION

In the disclosure, terms such as "first" and "second" are used to distinguish between same items or similar items that provide basically the same function and effect. A person skilled in the art may understand that the terms such as "first" and "second" do not limit a quantity or an execution sequence, and the terms such as "first" and "second" do not indicate a definite difference. The term "and/or" describes an association between associated objects and indicates that three relationships may exist. For example, A and/or B may indicate the following three cases: only A exists, both A and B exist, and only B exists. The character "/" generally indicates an "or" relationship between the associated objects.

It may be understood that, in the disclosure, "at least one" means one or more, and "multiple" means two or more. In addition, the term "equal to" in the disclosure may be used in conjunction with the term "greater than" or the term "less than". In the case where the terms "equal to" and "greater than" are used in conjunction, the technical solution of "greater than" is adopted. In the case where the terms "equal to" and "less than" are used in conjunction, the technical solution of "less than" is adopted.

First, a system architecture involved in the disclosure is described.

The disclosure may be applied to a 5th generation (5G) system, which may also be referred to as a new radio (NR) system, a 6th generation (6G) system, a 7th generation (7G) system, or another future communication system, or may be further applied to a device to device (D2D) system, a machine to machine (M2M) system, a vehicle to everything (V2X) system, and the like.

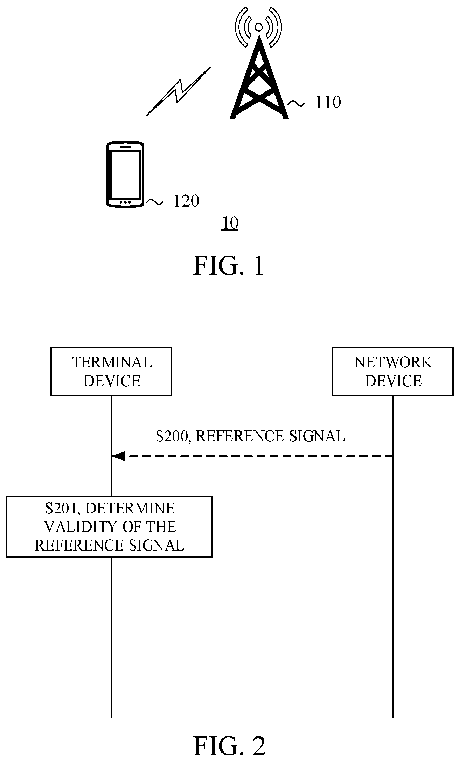

The disclosure may be applied to a system architecture illustrated in FIG. 1. A communication system 10 illustrated in FIG. 1 may include, but is not limited to, a network device 110 and a terminal device 120. The quantity and form of devices in FIG. 1 are used as an example and do not constitute a limitation on the embodiments of the present disclosure. For example, in practical application, multiple terminal devices may be included.

A terminal device, which is also referred to as a user equipment (UE), a mobile station (MS), a mobile terminal (MT), or the like, is a device that provides voice and/or data connectivity for a user, for example, a handheld device or a vehicle-mounted device having a wireless connection function. Currently, some examples of the terminal device are: a mobile phone, a tablet computer, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home.

In the disclosure, an apparatus configured to implement a function of a terminal device may be a terminal device, or may be an apparatus that can support the terminal device in implementing the function, for example, a chip or a chip module. The apparatus may be installed in the terminal device or may be matched with the terminal device for usage. In the technical solutions provided in the disclosure, an example in which an apparatus configured to implement a function of a terminal device is a terminal device is used to describe the technical solutions provided in the disclosure.

A network device, which may also be referred to as an access network device, is a radio access network (RAN) node (or device) that connects the terminal device to a wireless network, and may also be referred to as a base station. Some examples of the RAN node are: a continuously evolved node B (gNB), a transmission reception point (TRP), an evolved node B (eNB), a radio network controller (RNC), a node B (NB), a base station controller (BSC), a base transceiver station (BTS), a home base station (for example, a home evolved node B or home node B, HNB), a baseband unit (BBU), or a wireless fidelity (Wi-Fi) access point (AP). In addition, in a network structure, the network device may include a centralized unit (CU) node, a distributed unit (DU) node, or a RAN device including the CU node and the DU node. It should be noted that, the centralized unit node and the distributed unit node may alternatively have other names, which is not limited in the disclosure.

In the disclosure, an apparatus configured to implement a function of a network device may be a network device, or may be an apparatus that can support the network device in implementing the function, for example, a chip or a chip module. The apparatus may be installed in the network device or may be matched with the network device for usage. In the technical solutions provided in the disclosure, an example in which an apparatus configured to implement a function of a network device is a network device is used to describe the technical solutions provided in the disclosure.

It is to be understood that, communication systems described in the embodiments of the disclosure aim to more clearly describe the technical solutions in the embodiments of the disclosure, but are not intended to limit the technical solutions provided in the embodiments of the disclosure. Those of ordinary skill in the art may know that as system architectures evolve and a new service scenario emerges, the technical solutions provided in the embodiments of the disclosure are further applicable to a similar technical problem.

Next, the relevant names or terms involved in the disclosure are explained to facilitate understanding by those skilled in the art.

### 1. Reference Signal

Reference signals can be divided into uplink reference signals and downlink reference signals. The reference signals in the disclosure refer to downlink reference signals. Downlink reference signals may include, but are not limited to a synchronization signal/physical broadcast channel block (SSB), a channel state information-reference signal (CSI-RS), a positioning reference signal (PRS), a demodulation reference signal (DMRS), a phase tracking reference signal (PTRS), etc. In the disclosure, the reference signal may be SSB, CSI-RS, or PRS, but in actual application, the reference signal is not limited to SSB, CSI-RS, or PRS.

The SSB may be used for beam management, time/frequency tracking, mobility management, radio link monitoring (RLM), or beam failure detection (BFD), etc.

The CSI-RS may be used for measuring CSI, beam management, time/frequency tracking, mobility management, RLM, or BFD, etc. CSI-RS used for CSI measurement can be referred to as CSI-RS for CSI. CSI-RS used for beam management can be referred to as CSI-RS for beam management or CSI-RS for L1-RSRP and L1-SINR, where L1-RSRP is layer 1 reference signal receiving power, and L1-SINR is layer 1 signal to interference plus noise ratio. CSI-RS used for time/frequency tracking can be referred to as TRS, which can also be referred to as CSI-RS for tracking. CSI-RS used for mobility management can be referred to as CSI-RS for mobility. CSI-RS used for RLM can be referred to as CSI-RS for RLM. CSI-RS used for BFD can be referred to as CSI-RS for BFD.

The TRS can be configured by a non-zero power CSI-RS resource set (NZP-CSI-RS-ResourceSet) parameter. One NZP-CSI-RS-ResourceSet may include 4 non-zero power CSI-RS resources (NZP CSI-RS resources) within 2 consecutive slots, with 2 NZP CSI-RS resources in each slot. The TRS may be periodic or non-periodic. When the TRS is periodic, the CSI-RS resources in the NZP-CSI-RS-ResourceSet have the same period, bandwidth, and subcarrier position. When the TRS is non-periodic, periodic CSI-RS resources are in one NZP-CSI-RS-ResourceSet, and non-periodic CSI-RS resources are in another NZP-CSI-RS-ResourceSet. The non-periodic CSI-RS resources and the periodic CSI-RS resources have the same bandwidth (same resource block position). The non-periodic CSI-RS resources and the periodic CSI-RS resources are in quasi co-location type-A (QCL-Type-A) and quasi co-location type-D (QCL-Type-D).

The PRS can be used for positioning. For example, the terminal device can measure PRS and feedback some measurements to the network, and the network can complete positioning based on the measurements.

### 2. Active time

For the C-DRX mechanism, the terminal device monitors the PDCCH during the active time. In other words, the active time is the time during which the PDCCH can be monitored. The active time is the duration during which certain timers are running, such as a duration timer (drx-on duration timer), or an inactivity timer (drx-inactivity timer), etc. The duration timer can also be referred to as a timer configured by the drx-on duration timer, where the drx-on duration timer can be regarded as a high-level parameter. The inactivity timer can also be referred to as a timer configured by the drx-inactivity timer, where the drx-inactivity timer can be regarded as a high-level parameter. It should be noted that the duration timer mentioned in the embodiments of the disclosure can be understood as the drx-on duration timer or a timer configured by the drx-on duration timer; the inactivity timer mentioned in the embodiments of the disclosure can be understood as the drx-inactivity timer or a timer configured by the drx-inactivity timer.

For the terminal device, in addition to monitoring the PDCCH in the active time, it can also measure or receive certain types of CSI-RS in the active time, such as CSI-RS for CSI acquisition or CSI-RS for mobility management, etc. For the network device, it can configure the C-DRX mechanism so that the terminal device monitors the PDCCH in the active time, measures or receives certain types of CSI-RS in the active time, but does not monitor the PDCCH outside the active time, and does not measure or receive certain types of CSI-RS outside the active time, thereby saving the power consumption of the terminal device. Correspondingly, the network device does not transmit the PDCCH or certain types of CSI-RS outside the active time, which can reduce the transmission time of the network device and increase the sleep time of the network device, thereby saving the power consumption of the network device.

However, the network device may still transmit some signals and/or channels outside the active time, and accordingly, the terminal device receives and processes some signals and/or channels outside the active time, which affects the power consumption of the terminal device. Further, it may also make it difficult for the network device to enter the sleep state, thereby affecting the power consumption of the terminal device.

In view of this, the disclosure provides a method for signal processing and a method for channel processing, which can not only save the power consumption of the terminal device but also save the power consumption of the network device.

Network energy savings (network power saving) is a concern for operators and equipment vendors. Network energy saving is beneficial for reducing operational costs and environmental protection. When the network load is low, the network device can transmit and receive signals or channels in the form of a bursty, i.e., concentrating the transmission and reception of signals or channels within a certain time period, and then entering a short-time sleep or micro sleep. This process is repeated. In this way, it can meet the load requirements and allow the network device to frequently enter short-time sleep, achieving energy savings for the network device. This short-time sleep can be at the symbol level or slot level. The disclosure can optimize the short-time sleep of the network device.

The following describes the method for signal processing provided in the disclosure.

Reference is made to FIG. 2, which is a schematic flow chart of a method for signal processing provided in the disclosure. The process specifically includes the following operations.

At S201, a terminal device determines validity of a reference signal.

Valid means that the terminal device can receive the reference signal or process the reference signal, such as receiving CSI-RS or processing the received CSI-RS (e.g., measuring). Invalid means that the terminal device can cancel the reception of the reference signal, not receive the reference signal, or not process the reference signal, such as canceling the reception of CSI-RS, not receiving CSI-RS, or not processing the received CSI-RS (e.g., measuring).

The terminal device determines the validity of the reference signal through the following methods.

Method 1: The terminal device determines that a reference signal in the active time is valid. The terminal device determines that a reference signal outside the active time is invalid.

Example 1: The reference signal is SSB. Currently, periodic SSB is transmitted by the network device both in and outside the active time, meaning that the terminal device assumes that SSB is always valid. This is beneficial for the terminal device to periodically measure SSB to achieve measurement performance (maintaining stable measurements). However, in order to allow the network device to enter the sleep state outside the active time, the network device can reduce the period of SSB (transmitting SSB more frequently) and stop transmitting SSB outside the active time. This ensures that the transmission opportunities of SSB in the active time are not reduced, maintaining the measurement performance of the terminal device while increasing the sleep time of the network device, thereby saving the power consumption of the network device. Correspondingly, it can also save the power consumption of the terminal device. The measurements mentioned here can be measurement for time/frequency tracking or measurement for CSI feedback, such as SSB index measurement/feedback, reference signal receiving power (RSRP) measurement/feedback, or signal to interference plus noise ratio (SINR) measurement/feedback. These measurements can be used for link adaptation to improve overall network performance.

Example 2: The reference signal is CSI-RS. Currently, certain types of periodic CSI-RS (e.g., CSI-RS for CSI) are transmitted by the network device both in and outside the active time, meaning that the terminal device assumes that CSI-RS is always valid. This is beneficial for the terminal device to periodically measure CSI-RS to achieve measurement performance (maintaining stable measurements). However, in order to allow the network device to enter the sleep state outside the active time, the network device can reduce the period of CSI-RS (transmitting CSI-RS more frequently) and stop transmitting CSI-RS outside the active time. This ensures that the transmission opportunities of CSI-RS in the active time are not reduced, maintaining the measurement performance of the terminal device while increasing the sleep time of the network device, thereby saving the power consumption of the network device. Correspondingly, it can also save the power consumption of the terminal device. The measurements mentioned here can be measurement for CSI feedback, such as CSI-RS index measurement/feedback, RSRP measurement/feedback, or SINR measurement/feedback. These measurements can be used for link adaptation to improve overall network performance.

Example 3: The reference signal is TRS. Currently, periodic TRS is transmitted by the network device both in and outside the active time, meaning that the terminal device assumes that periodic TRS is always valid. This is beneficial for the terminal device to periodically measure TRS to achieve time/frequency tracking performance (maintaining stable time/frequency error estimation). However, to allow the network device to enter the sleep state outside the active time, the network device can reduce the period of TRS (transmitting TRS more frequently) and stop transmitting TRS outside the active time. This ensures that the transmission opportunities of TRS in the active time are not reduced, maintaining the time/frequency tracking performance of the terminal device while increasing the sleep time of the network device, thereby saving the power consumption of the network device. Correspondingly, it can also save the power consumption of the terminal device.

Example 4: The reference signal is PRS. Currently, periodic PRS is transmitted by the network device both in and outside the active time, meaning that the terminal device assumes that periodic PRS is always valid. This is beneficial for the terminal device to periodically measure PRS to achieve positioning performance (maintaining stable positioning-related measurements). However, to allow the network device to enter the sleep state outside the active time, the network device can reduce the period of PRS (transmitting PRS more frequently) and stop transmitting PRS outside the active time. This ensures that the transmission opportunities of PRS in the active time are not reduced, maintaining the positioning performance of the terminal device while increasing the sleep time of the network device, thereby saving the power consumption of the network device. Correspondingly, it can also save the power consumption of the terminal device.

If the terminal device receives a wake-up indication indicating not to wake up, the terminal device determines that a reference signal in the duration indicated by the drx-on duration timer is valid. If the wake-up indication indicates not to wake up, the drx-on duration timer will not start, so the duration indicated by the drx-on duration timer is not considered as active time. According to method 1 above, the terminal device can determine that the reference signal in the duration indicated by the drx-on duration timer is invalid. This allows the network device to dynamically invalidate the reference signal through the wake-up indication, but this may not always be beneficial for ensuring the performance of the terminal device (e.g., when the reference signal is TRS, the performance may be time/frequency tracking performance). Therefore, in certain scenarios, the network device transmits a wake-up indication while ensuring the performance of the terminal device. In this case, the network device still transmits the reference signal in the duration indicated by the drx-on duration timer, even if the wake-up indication indicates that the time is not the active time. The reference signal may be SSB, CSI-RS, TRS, or PRS.

If the terminal device does not receive a wake-up indication and is configured with a first high-level parameter with a value being a first value, the terminal device determines that a reference signal in the duration indicated by the drx-on duration timer is valid. This allows the network device to control, by configuring high-level parameters, how the terminal device determines the validity of the reference signal when no wake-up indication is received. This can ensure the performance of the terminal device by continuing to transmit the reference signal in the duration indicated by the drx-on duration timer, and increase the sleep time of the network device by not transmitting the reference signal in the duration indicated by the drx-on duration timer. The reference signal may be SSB, CSI-RS, TRS, or PRS. It is to be noted that "configured with the first high-level parameter with a value being the first value" may be understood as "configured with the first high-level parameter", where the first high-level parameter has only one value, i.e., the first value. For example, the first value may be "true" or "false". For example, the first high-level parameter may be a power-saving wake-up parameter (ps-Wakeup).

The reference signals in method 1 above are all periodic reference signals. Although the terminal device can determine the validity of the reference signals under different conditions, the reference signals are still periodic, and the terminal device can apply algorithms corresponding to periodic reference signals rather than adopting new algorithms, resulting in lower complexity. For example, if the reference signal is TRS, the terminal device can use the time/frequency tracking algorithm for periodic TRS. For another example, if the reference signal is PRS, the terminal device can use the positioning-related measurement algorithm for periodic PRS.

Method 2: The terminal device determines that a reference signal after a first time interval is valid. The terminal device determines that a reference signal before the first time interval is invalid.

The start time of the first time interval may be the start-up time of the drx-on duration timer. The duration of the first time interval is a preset duration. The specific value of the preset duration may be predefined by the protocol and/or configured by the network device. In other words, the terminal device determines that the reference signal after a time interval following the start-up of the drx-on duration timer is valid, and this time interval is the preset duration. In this way, when the network device uses a wake-up indicator (e.g., wake-up indication) to wake up the terminal device, the transmission time of the valid reference signal may be as close as possible to the start-up time of the drx-on duration timer.

The start-up time of the drx-on duration timer may be triggered by a wake-up indicator (e.g., wake-up indication) transmitted by the network device. The terminal device can start the drx-on duration timer upon receiving the wake-up indication. The time at which the drx-on duration timer is started is the start-up time of the drx-on duration timer. Optionally, the wake-up indication may be a field in DCI. For example, when the value of this field is 1, it indicates to wake up (or activate), i.e., start the drx-on duration timer; when the value of this field is 0, it indicates not to wake up (or not to activate), i.e., not to start the drx-on duration timer.

Example 1: The reference signal is a SSB. If the network device triggers the terminal device to start the drx-on duration timer via a wake-up indication, the terminal device needs to perform SSB measurement as soon as possible to achieve specific performance for link adaptation. Therefore, the network device promptly transmits an SSB before periodically transmitted SSBs, where the promptly transmitted SSB is non-periodic and valid. In this way, the transmission time of this SSB can be as close as possible in time to the start-up time of the drx-on duration timer.

Example 2: The reference signal is CSI-RS. If the network device triggers the terminal device to start the drx-on duration timer via a wake-up indication, the terminal device needs to perform CSI-RS measurement as soon as possible to achieve specific performance for link adaptation. Therefore, the network device promptly transmits an CSI-RS before periodically transmitted CSI-RSs, where the promptly transmitted CSI-RS is non-periodic and valid. In this way, the transmission time of this CSI-RS can be as close as possible in time to the start-up time of the drx-on duration timer.

Example 3: The reference signal is TRS. If the network device triggers the terminal device to start the drx-on duration timer via a wake-up indication, the terminal device needs to perform time/frequency tracking as soon as possible to achieve specific time/frequency synchronization performance for receiving PDCCH and PDSCH. Therefore, the network device promptly transmits an TRS before periodically transmitted TRSs, where the promptly transmitted TRS is non-periodic and valid. In this way, the transmission time of this TRS can be as close as possible in time to the start-up time of the drx-on duration timer.

Example 4: The reference signal is PRS. If the network device triggers the terminal device to start the drx-on duration timer via a wake-up indication, the terminal device needs to perform time/frequency tracking as soon as possible to achieve specific positioning performance requirements and feedback measurement data. Therefore, the network device promptly transmits an PRS before periodically transmitted PRSs, where the promptly transmitted PRS is non-periodic and valid. In this way, the transmission time of this PRS can be as close as possible in time to the start-up time of the drx-on duration timer.

Method 3: The terminal device determines that a reference signal in a first time window is valid. The terminal device determines that a reference signal outside the first time window is invalid.

The first time window may be a large time window, which, compared to the duration indicated by the drx-on duration timer of a terminal device, can cover the durations indicated by the drx-on duration timers of multiple terminal devices or multiple terminal device groups. Moreover, by decoupling the first time window from the drx-on duration timer, greater flexibility is achieved.

The offset of the first time window may be indicated by a second high-level parameter. This allows the network device to flexibly configure the period and the offset of the first time window.

The above methods 1 to 3 are for illustrative purposes and do not limit the embodiments of the disclosure.

Optionally, the above method also includes operation at S200, where the network device transmits the reference signal to the terminal device. Correspondingly, the terminal device receives the reference signal from the network device. For example, the network device can transmit valid reference signals to the terminal device, and the terminal device can process the valid reference signals. The operation at S200 can be executed before the operation at S201, as illustrated in FIG. 2. The operation at S200 can also be executed after the operation at S201, for example, the terminal device determines valid reference signals and receives valid reference signals from the network device.

In the embodiment illustrated in FIG. 2, by determining the validity of the reference signal, valid reference signals are processed, and invalid reference signals are not processed, thereby saving the power consumption.

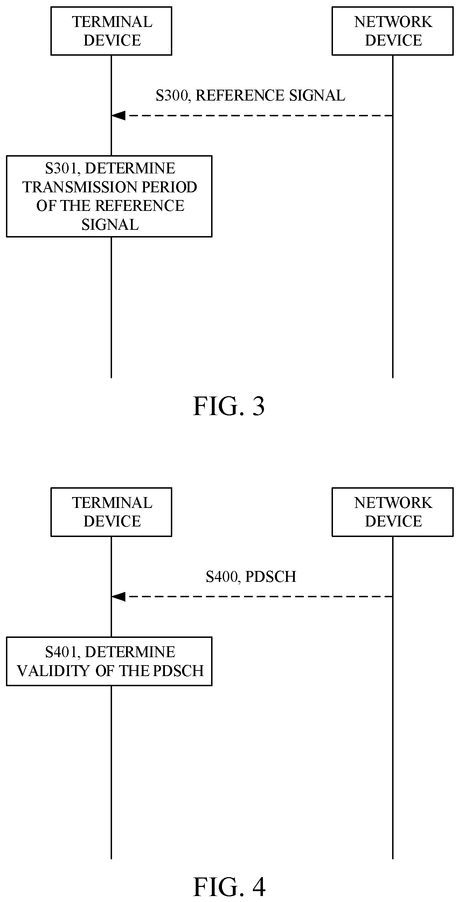

Reference is made to FIG. 3, which is a schematic flow chart of a method for signal processing provided in the disclosure. The process specifically includes the following operations.

At S301, a terminal device determines the transmission periodicity of a reference signal.

The terminal device can determine the transmission periodicity of the reference signal through the following methods.

Method 1: The terminal device determines that the transmission periodicity of a reference signal in the active time is a first period. For example, the terminal device determines that the transmission periodicity of a reference signal received in the active time is the first period. The terminal device determines that the transmission periodicity of a reference signal outside the active time is a second period. For example, the terminal device determines that the transmission periodicity of a reference signal received outside the active time is the second period.

The first period is shorter than the second period, meaning that the reference signals in the first period are denser, while the reference signals in the second period are sparser. Alternatively, the first period is a short period, and the second period is a long period.

Example 1: The reference signal is SSB. Periodic SSB has two periods. In the active time, since the terminal device needs to monitor the PDCCH and may be scheduled to receive or transmit data (PDSCH or physical uplink shared channel (PUSCH)), a shorter SSB period is required to ensure better measurement performance. Since the terminal device does not need to monitor the PDCCH outside the active time and only needs to maintain basic measurement performance, a longer SSB period is adopted to increase the sleep time of the network device. Correspondingly, the power consumption of the terminal device can also be saved.

Example 2: The reference signal is CSI-RS. Periodic CSI-RS has two periods. In the active time, since the terminal device needs to monitor the PDCCH and may be scheduled to receive or transmit data (PDSCH or PUSCH), a shorter CSI-RS period is required to ensure better measurement performance. Since the terminal device does not need to monitor the PDCCH outside the active time and only needs to maintain basic measurement performance, a longer CSI-RS period is adopted to increase the sleep time of the network device. Correspondingly, the power consumption of the terminal device can also be saved.

Example 3: The reference signal is TRS. Periodic TRS has two periods. In the active time, since the terminal device needs to monitor the PDCCH and may be scheduled to receive PDSCH or transmit PUSCH, a shorter TRS period is required. Since the terminal device does not need to monitor the PDCCH outside the active time and only needs to maintain basic time/frequency tracking performance, a longer TRS period is used to increase the sleep time of the network device. Correspondingly, the power consumption of the terminal device can also be saved.

Example 4: The reference signal is PRS. Periodic PRS has two periods. In the active time, since the terminal device needs to feedback measurement data, a shorter PRS period is required. Since the terminal device does not need to feedback measurement data outside the active time and only needs to maintain basic positioning performance, a longer PRS period is used to increase the sleep time of the network device. Correspondingly, the power consumption of the terminal device can also be saved.

If the terminal device receives a wake-up indication indicating not to wake up, the terminal device determines that the transmission periodicity of a reference signal in the duration indicated by the drx-on duration timer is the first period. If the wake-up indication indicates not to wake up, the drx-on duration timer will not start, so the duration indicated by the drx-on duration timer is not considered as active time. According to method 1 above, the terminal device can determine that the transmission periodicity of the reference signal in the duration indicated by the drx-on duration timer is the first period. This allows the network device to dynamically indicate that the transmission periodicity of the reference signal is the second period through the wake-up indication, but this may not always be beneficial for ensuring the performance of the terminal device (e.g., when the reference signal is TRS, the performance may be time/frequency tracking performance). Therefore, in certain scenarios, the network device transmits a wake-up indication while ensuring the performance of the terminal device. In this case, the network device still transmits the reference signal with the transmission periodicity being the first period in the duration indicated by the drx-on duration timer, even if the wake-up indication indicates that the time is not the active time. The reference signal may be SSB, CSI-RS, TRS, or PRS.

If the terminal device does not receive a wake-up indication and is configured with a first high-level parameter with a value being a first value, the terminal device determines that the transmission periodicity of a reference signal in the duration indicated by the drx-on duration timer is the first period. This allows the network device to control, by configuring high-level parameters, how the terminal device determines the transmission periodicity of the reference signal when no wake-up indication is received. This can ensure terminal device performance by transmitting reference signals with the first period in the duration indicated by the drx-on duration timer, or increase the sleep time of the network device by not transmitting reference signals in the duration indicated by the drx-on duration timer. The reference signal can be SSB, CSI-RS, TRS, or PRS.

The reference signals in method 1 above are all periodic reference signals. Although the terminal device can determine the validity of the reference signals under different conditions, the reference signals are still periodic, and the terminal device can apply algorithms corresponding to periodic reference signals, resulting in lower complexity. For example, if the reference signal is TRS, the terminal device can use the time/frequency tracking algorithm for periodic TRS. For another example, if the reference signal is PRS, the terminal device can use the positioning-related measurement algorithm for periodic PRS.

Method 2: The terminal device determines that the transmission periodicity of a reference signal in a first time window is the first period. The terminal device determines that the transmission periodicity of a reference signal outside the first time window is the second period.

The first time window may be a large time window, which, compared to the duration indicated by the drx-on duration timer of a terminal device, can cover the durations indicated by the drx-on duration timers of multiple terminal devices or multiple terminal device groups. Moreover, by decoupling the first time window from the drx-on duration timer, greater flexibility is achieved.

The offset of the first time window may be indicated by a second high-level parameter. This allows the network device to flexibly configure the period and the offset of the first time window.

The above methods 1 and 2 are for illustrative purposes and do not limit the embodiments of the disclosure.

Optionally, the above method also includes operation at S300, where the network device transmits the reference signal to the terminal device. Correspondingly, the terminal device receives the reference signal from the network device. For example, the network device transmits reference signals with the transmission periodicity being the first period in the active time, and transmits reference signals with the transmission periodicity being the second period outside the active time. The operation at S300 can be executed before the operation at S301, as illustrated in FIG. 3. The operation at S300 can also be executed after the operation at S301, for example, the terminal device determines the transmission periodicity of the reference signal is the first period and receives the reference signal with the transmission periodicity being the first period from the network device.

In the embodiment illustrated in FIG. 3, by determining the transmission periodicity of the reference signal, the terminal device can determine reference signals to be processed, thereby saving the power consumption.

The following describes the method for channel processing provided in the disclosure.

Reference is made to FIG. 4, which is a schematic flow chart of a method for channel processing provided in an embodiment of the disclosure. The process specifically includes the following operations.

At S401, the terminal device determines validity of a PDSCH.

The PDSCH may be a semi-persistent scheduling (SPS) PDSCH.

Method 1: The terminal device determines that a PDSCH in the active time is valid. For example, the terminal device determines that a PDSCH received in the active time is valid. The terminal device determines that a PDSCH outside the active time is invalid. For example, the terminal device determines that a PDSCH received outside the active time is invalid.

Currently, SPS-PDSCH is transmitted by the network device both in and outside the active time, meaning that the terminal device assumes that SPS-PDSCH is always valid. This is beneficial for the terminal device to periodically receive SPS-PDSCH to achieve low-latency performance. However, to allow the network device to enter the sleep state outside the active time, the network device can reduce the period of SPS-PDSCH (transmitting SPS-PDSCH more frequently) and stop transmitting SPS-PDSCH outside the active time. This ensures that the transmission opportunities of SPS-PDSCH in the active time are not reduced, maintaining low-latency performance while increasing the sleep time of the network device, thereby saving the power consumption of the network device. Correspondingly, the power consumption of the terminal device can also be saved.

If the terminal device receives a wake-up indication indicating not to wake up, the terminal device determines that a SPS-PDSCH in the duration indicated by the drx-on duration timer is valid. If the wake-up indication indicates not to wake up, the drx-on duration timer will not started, so the duration indicated by the drx-on duration timer is not considered as active time. According to Method 1 above, the terminal device can determine that the SPS-PDSCH in the duration indicated by the drx-on duration timer is invalid. This allows the network device to dynamically invalidate the SPS-PDSCH through the wake-up indication, but this may not always be beneficial for ensuring low-latency performance. Therefore, in certain scenarios, the network device transmits a wake-up indication while ensuring low-latency performance. In this case, the network device still transmits SPS-PDSCH in the duration indicated by the drx-on duration timer, even if the wake-up indication indicates that the time is not the active time.

If the terminal device does not receive a wake-up indication and is configured with a first high-level parameter with a value being a first value, the terminal device determines that a SPS-PDSCH in the duration indicated by the drx-on duration timer is valid. This allows the network device to control, by configuring high-level parameters, how the terminal device determines the validity of the SPS-PDSCH when no wake-up indication is received. This can ensure low-latency performance by transmitting SPS-PDSCH in the duration indicated by the drx-on duration timer, or increase the sleep time of the network device by not transmitting SPS-PDSCH in the duration indicated by the drx-on duration timer.

Method 2: The terminal device determines that a PDSCH in a second time window is valid. The terminal device determines that a PDSCH outside the second time window is invalid.

The second time window may be a large time window, which, compared to the duration indicated by the drx-on duration timer of a terminal device, can cover the durations indicated by the drx-on duration timers of multiple terminal devices or multiple terminal device groups. Moreover, by decoupling the second time window from the drx-on duration timer, greater flexibility is achieved.

The offset of the second time window may be indicated by a third high-level parameter. This allows the network device to flexibly configure the period and the offset of the second time window.

The above methods 1 and 2 are for illustrative purposes and do not limit the embodiments of the disclosure.

Optionally, the above method also includes operation at S400, where the network device transmits the PDSCH to the terminal device. Correspondingly, the terminal device receives the PDSCH from the network device. For example, the network device can transmit valid PDSCH to the terminal device, and the terminal device can process the valid PDSCH. The operation at S400 can be executed before the operation at S401, as illustrated in FIG. 4. The operation at S400 can also be executed after the operation at S401, for example, the terminal device determines valid PDSCH and receives the valid PDSCH from the network device.

In the embodiment illustrated in FIG. 4, by determining the validity of the PDSCH, valid PDSCHs are processed, and invalid PDSCHs are not processed, thereby saving the power consumption.

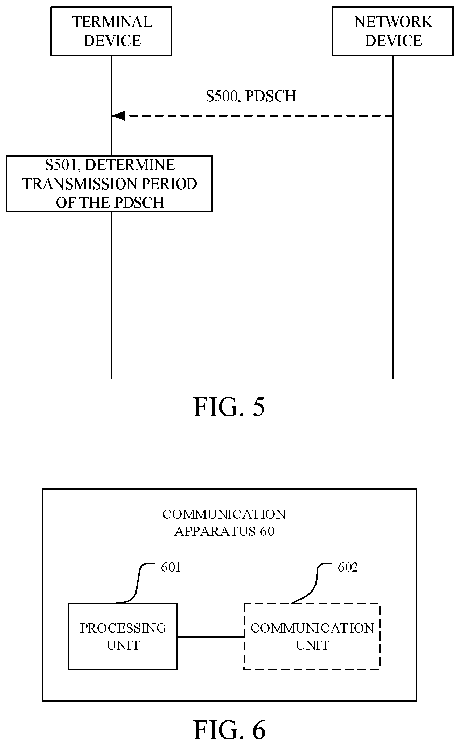

Reference is made to FIG. 5, which is a schematic flow chart of a method for channel processing provided in an embodiment of the disclosure. The process specifically includes the following operations.

At S501, the terminal device determines the transmission periodicity of a PDSCH.

The terminal device can determine the transmission periodicity of the PDSCH through the following methods.

Method 1: The terminal device determines that the transmission periodicity of the PDSCH in the active time is a third period. For example, the terminal device determines that the transmission periodicity of the PDSCH received in the active time is the third period. The terminal device determines that the transmission periodicity of the PDSCH outside the active time is a fourth period. For example, the terminal device determines that the transmission periodicity of the PDSCH received outside the active time is the fourth period.

The third period is shorter than the fourth period, meaning that the PDSCHs in the third period are denser, while the PDSCHs in the fourth period are sparser. Alternatively, the third period is a short period, and the fourth period is a long period.

SPS-PDSCH has two periods. In the active time, since the terminal device needs to reduce data latency, a shorter SPS-PDSCH period is required. Since the terminal device does not require very low data latency outside the active time and only needs to maintain basic low-latency performance, a longer SPS-PDSCH period is adopted to increase the sleep time of the network device. Correspondingly, the power consumption of the terminal device can also be saved.

If the terminal device receives a wake-up indication indicating not to wake up, the terminal device determines that the transmission periodicity of a SPS-PDSCH in the duration indicated by the drx-on duration timer is the third period. If the wake-up indication indicates not to wake up, the drx-on duration timer will not started, so the duration indicated by the drx-on duration timer is not considered as active time. According to method 1 above, the terminal device can determine that the transmission periodicity of the SPS-PDSCH in the duration indicated by the drx-on duration timer is the third period. This allows the network device to dynamically indicate that the transmission periodicity of the SPS-PDSCH is the fourth period through the wake-up indication, but this may not always be beneficial for ensuring low-latency performance. Therefore, in certain scenarios, the network device transmits a wake-up indication while ensuring low-latency performance. In this case, the network device transmits SPS-PDSCH with the transmission periodicity being the third period in the duration indicated by the drx-on duration timer, even if the wake-up indication indicates that the time is not the active time.

If the terminal device does not receive a wake-up indication and is configured with a first high-level parameter with a value being a first value, the terminal device determines that the transmission periodicity of a SPS-PDSCH in the duration indicated by the drx-on duration timer is the third period. This allows the network device to control, by configuring high-level parameters, how the terminal device determines the transmission periodicity of the SPS-PDSCH when no wake-up indication is received. This can ensure low-latency performance by transmitting SPS-PDSCH in the duration indicated by the drx-on duration timer, or increase network device sleep time by not transmitting SPS-PDSCH in the duration indicated by the drx-on duration timer.

Method 2: The terminal device determines that the transmission periodicity of a PDSCH in a second time window is the third period. The terminal device determines that the transmission periodicity of a PDSCH outside the second time window is the fourth period.

The second time window may be a large time window, which, compared to the duration indicated by the drx-on duration timer of a terminal device, can cover the durations indicated by the drx-on duration timers of multiple terminal devices or multiple terminal device groups. Moreover, by decoupling the second time window from the drx-on duration timer, greater flexibility is achieved.

The offset of the second time window may be indicated by a third high-level parameter. This allows the network device to flexibly configure the period and the offset of the second time window.

The above methods 1 and 2 are for illustrative purposes and do not limit the embodiments of the disclosure.

Optionally, the above method also includes operation at S500, where the network device transmits the PDSCH to the terminal device. Correspondingly, the terminal device receives the PDSCH from the network device. For example, the network device transmits PDSCH with the transmission periodicity being the third period in the active time and transmits PDSCH with the transmission periodicity being the fourth period outside the active time. The operation at S500 can be executed before the operation at S501, as illustrated in FIG. 5. The operation at S500 can also be executed after the operation at S501, for example, the terminal device determines that the transmission periodicity of the PDSCH is the third period and receives the PDSCH with the transmission periodicity being the third period from the network device.

In the embodiment illustrated in FIG. 5, by determining the transmission periodicity of the PDSCH, the terminal device can determine PDSCHs to be processed, thereby saving the power consumption.

Reference is made to FIG. 6, which is a schematic structural view of a communication apparatus provided in the disclosure. A communication apparatus 60 may be a terminal device, or may be an apparatus that matches with the terminal device. As illustrated in FIG. 6, the communication apparatus 60 includes a processing unit 601. Optionally, the communication apparatus 60 further includes a communication unit 602.

In an embodiment, the processing unit 601 is configured to determine validity of a reference signal, or determine a transmission periodicity of the reference signal.

Optionally, the processing unit 601 is specifically configured to determine that a reference signal after a first time interval is valid, where a start time of the first time interval is a start-up time of a duration timer, and a duration of the first time interval is a preset duration. The reference signal is a non-periodic reference signal.

Optionally, the processing unit 601 is specifically configured to determine that a reference signal in an active time is valid, and determine that a reference signal outside the active time is invalid.

Optionally, the processing unit 601 is specifically configured to determine that a transmission periodicity of a reference signal in an active time is a first period, and determine that a transmission periodicity of a reference signal outside the active time is a second period. Generally, the second period is longer than the first period so as to achieve power saving gains.

Optionally, the processing unit 601 is specifically configured to, when receiving a wake-up indication indicating not to wake up, determine that a reference signal in a duration indicated by a duration timer is valid, or determine that a transmission periodicity of the reference signal in the duration indicated by the duration timer is a first period.

Optionally, the processing unit 601 is specifically configured to, when not receiving a wake-up indication and being configured with a first high-level parameter with a value being a first value, determine that a reference signal in a duration indicated by a duration timer is valid, or determine that a transmission periodicity of the reference signal in the duration indicated by the duration timer is a first period.

Optionally, the processing unit 601 is specifically configured to determine that a reference signal in a first time window is valid, and determine that a reference signal outside the first time window is invalid.

Optionally, the processing unit 601 is specifically configured to determine that a transmission periodicity of a reference signal in a first time window is a first period, and determine that a transmission periodicity of a reference signal outside the first time window is a second period. Generally, the second period is longer than the first period so as to achieve power saving gains.

Optionally, a period and an offset of the first time window are indicated by a second high-level parameter.

Optionally, the reference signal is a periodic reference signal.

Optionally, the reference signal is a SSB, a CSI-RS, or a PRS.

Optionally, the CSI-RS includes a TRS.

In another embodiment, the processing unit 601 is configured to determine validity of a PDSCH, or determine a transmission periodicity of the PDSCH.

Optionally, the processing unit 601 is specifically configured to determine that a PDSCH in an active time is valid, and determine that a PDSCH outside the active time is invalid.

Optionally, the processing unit 601 is specifically configured to determine that a transmission periodicity of a PDSCH in an active time is a third period, and determine that a transmission periodicity of a PDSCH outside the active time is a fourth period. Generally, the fourth period is longer than the third period so as to achieve power saving gains.

Optionally, the processing unit 601 is specifically configured to determine that a PDSCH in a second time window is valid, and determine that a PDSCH outside the second time window is invalid.

Optionally, the processing unit 601 is specifically configured to determine that a transmission periodicity of a PDSCH in a second time window is a third period, and determine that a transmission periodicity of a PDSCH outside the second time window is a fourth period. Generally, the fourth period is longer than the third period so as to achieve power saving gains.

Optionally, a period and an offset of the second time window are indicated by a third high-level parameter.

Optionally, the PDSCH is a SPS PDSCH.

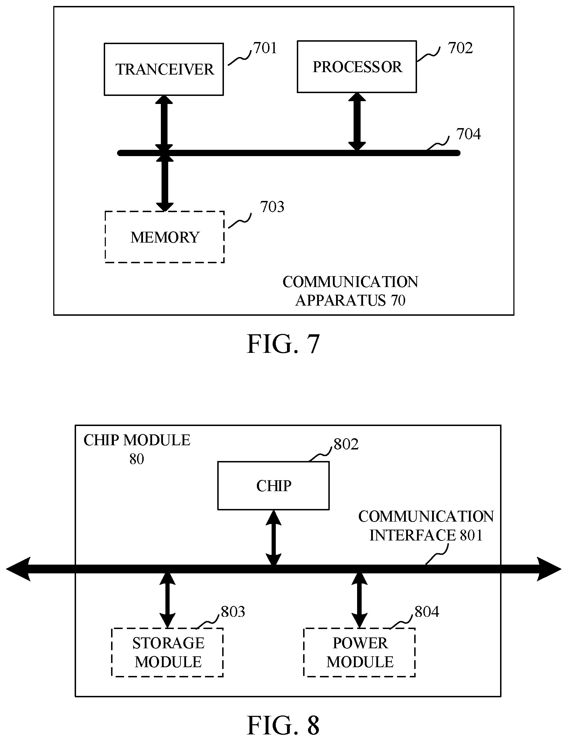

Reference is made to FIG. 7, which is a schematic structural view of another communication apparatus provided in the disclosure. A communication apparatus 70 may be a terminal device, or may be an apparatus that matches with the terminal device. Optionally, the communication apparatus may include a memory 703. A transceiver 701, a processor 702, and the memory 703 are connected to each other by using a bus 704 or other manners. The bus is represented by using a thick line in FIG. 7. A manner of connection between other components is only an example, and is not limited. The bus may be classified into an address bus, a data bus, a control bus, or the like. For ease of representation, only one thick line is used in FIG. 7 for representation, but it does not indicate that there is only one bus or one type of bus.

Coupling in embodiments of the disclosure is an indirect coupling or a communication connection between apparatuses, units, or modules, may be in an electrical form, a mechanical form, or another form, and is used for information exchange between the apparatuses, the units, or the modules. In embodiments of the disclosure, a specific connection medium between the transceiver 701, the processor 702, and the memory 703 is not limited.

The memory 703 may include a read-only memory (ROM) and a random access memory (RAM), and may provide instructions and data to the processor 702. A portion of the memory 703 may include a non-volatile RAM.

The processor 702 may be a central processing unit (CPU). The processor 702 may also be other general-purpose processors, digital signal processor (DSP), application specific integrated circuit (ASIC), field programmable gate array (FPGA), or other programmable logic devices, discrete gates or transistor logic devices, discrete hardware components, etc. A general-purpose processor may be a microprocessor, and optionally, the processor 702 may also be any conventional processor, etc.

In an optional embodiment, the memory 703 is configured to store program instructions. The processor 702 is configured to invoke program instructions stored in the memory 703 for executing the operations performed by the terminal device in the embodiments corresponding to FIG. 2 to FIG. 5.

In embodiments of the disclosure, computer programs (including program codes) capable of executing all the steps involved in the above method can be run in a general computing device, such as a computer, including a CPU, a RAM, a ROM and other processing elements and memory elements, so as to implement the method provided in embodiments of the disclosure. The computer programs may be recorded, for example, on a computer-readable storage medium, loaded to the above-described computing apparatus through the computer-readable storage medium, and run in the computing apparatus.

Based on the same inventive concept, the principles and advantageous effects of the communication apparatus 70 provided in embodiments of the disclosure for solving problems are similar to the principles and advantageous effects of the embodiments provided in FIG. 2 to FIG. 5 of the disclosure for solving problems, and reference can be made to the principles and advantageous effects of the embodiments of the method, which will not be described in detail here for the sake of brevity.

The previous-mentioned communication apparatus may be, for example, a chip or a chip module.

Embodiments of the disclosure further provide a chip, which includes a processor. The processor can execute operations performed by the terminal device in the above method embodiments.

In an embodiment, the chip is configured to determine validity of a reference signal, or determine a transmission periodicity of the reference signal.

Optionally, the chip is specifically configured to determine that a reference signal after a first time interval is valid, where a start time of the first time interval is a start-up time of a duration timer, and a duration of the first time interval is a preset duration. The reference signal is a non-periodic reference signal.

Optionally, the chip is specifically configured to determine that a reference signal in an active time is valid, and determine that a reference signal outside the active time is invalid.

Optionally, the chip is specifically configured to determine that a transmission periodicity of a reference signal in an active time is a first period, and determine that a transmission periodicity of a reference signal outside the active time is a second period. Generally, the second period is longer than the first period so as to achieve power saving gains.

Optionally, the chip is specifically configured to, when receiving a wake-up indication indicating not to wake up, determine that a reference signal in a duration indicated by a duration timer is valid, or determine that a transmission periodicity of the reference signal in the duration indicated by the duration timer is a first period.

Optionally, the chip is specifically configured to, when not receiving a wake-up indication and being configured with a first high-level parameter with a value being a first value, determine that a reference signal in a duration indicated by a duration timer is valid, or determine that a transmission periodicity of the reference signal in the duration indicated by the duration timer is a first period.

Optionally, the chip is specifically configured to determine that a reference signal in a first time window is valid, and determine that a reference signal outside the first time window is invalid.

Optionally, the chip is specifically configured to determine that a transmission periodicity of a reference signal in a first time window is a first period, and determine that a transmission periodicity of a reference signal outside the first time window is a second period. Generally, the second period is longer than the first period so as to achieve power saving gains.

Optionally, a period and an offset of the first time window are indicated by a second high-level parameter.

Optionally, the reference signal is a periodic reference signal.

Optionally, the reference signal is a SSB, a CSI-RS, or a PRS.

Optionally, the CSI-RS includes a TRS.

In another embodiment, the chip is configured to determine validity of a PDSCH, or determine a transmission periodicity of the PDSCH.

Optionally, the chip is specifically configured to determine that a PDSCH in an active time is valid, and determine that a PDSCH outside the active time is invalid.

Optionally, the chip is specifically configured to determine that a transmission periodicity of a PDSCH in an active time is a third period, and determine that a transmission periodicity of a PDSCH outside the active time is a fourth period. Generally, the fourth period is longer than the third period so as to achieve power saving gains.

Optionally, the chip is specifically configured to determine that a PDSCH in a second time window is valid, and determine that a PDSCH outside the second time window is invalid.

Optionally, the chip is specifically configured to determine that a transmission periodicity of a PDSCH in a second time window is a third period, and determine that a transmission periodicity of a PDSCH outside the second time window is a fourth period. Generally, the fourth period is longer than the third period so as to achieve power saving gains.

Optionally, a period and an offset of the second time window are indicated by a third high-level parameter.

Optionally, the PDSCH is a SPS PDSCH.

Reference is made to FIG. 8, which is a schematic structural view of a chip module provided in an embodiment of the disclosure. A chip module 80 can execute the operations performed by the terminal device in the above method embodiments. The chip module 80 includes a communication interface 801 and a chip 802.

The communication interface is configured for internal communication of the chip module or for communication between the chip module and external devices. The communication interface may be described as a communication module. The chip 802 is configured to implement functions of the terminal device in embodiments of the disclosure.

For example, the chip 802 is configured to determined validity of the reference signal, or determined the transmission periodicity of the reference signal. For another example, the chip 802 is configured to determined validity of the PDSCH, or determined the transmission periodicity of the PDSCH.

Optionally, the chip module 80 further includes a storage module 803, a power module 804. The storage module 803 is configured to store data and instructions. The power module 804 is configured to supply power to the chip module.

With regard to various devices and products applied to or integrated into a chip module, various modules included therein may all be implemented by means of hardware such as circuit, and different modules may be located in the same component (e.g. chip, circuit module, etc.) or different components of the chip module. Alternatively, at least some of the modules may be implemented by means of a software program run on a processor integrated into the chip module, and the rest (if any) of the modules may be implemented by means of hardware such as circuit.

Embodiments of the disclosure further provide a computer-readable storage medium. The computer-readable storage medium stores an instruction or multiple instructions which, when executed by a processor, implement the method provided in the above method embodiments.

Embodiments of the disclosure further provide a computer program product. The computer program product includes a computer program or instructions which, when executed by a computer, cause the computer to perform the method provided in the above method embodiments.

It may be noted that, for the sake of brevity, various embodiments above are described as a series of action combinations. However, it will be appreciated by those skilled in the art that the disclosure is not limited by the sequence of actions described. According to the disclosure, some operations may be performed in other orders or simultaneously. In addition, it will be appreciated by those skilled in the art that the embodiments described in the specification are preferable embodiments, and the actions, operations, modules, and units involved are not necessarily essential to the disclosure.

In the above embodiments, elaboration of each embodiment has its own emphasis. For the part not described in detail in an embodiment, reference can be made to related elaborations of other embodiments.

The operations of the method or algorithm described in the embodiments of the disclosure may be implemented in a hardware manner, or may be implemented in a manner of executing, by a processor, software. A software instruction may consist of a corresponding software module, and the software module may be stored in a RAM, a flash memory, a ROM, an erasable programmable ROM (EPROM), an electrically EPROM (EEPROM), a register, a hard disk, a mobile hard disk, a compact disc-ROM (CD-ROM) or a storage medium in any other form well known in the field. An exemplary storage medium is coupled to the processor, thereby enabling the processor to read information from the storage medium and write information into the storage medium. Of course, the storage medium may also be a component of the processor. The processor and the storage medium may be located in an ASIC. In addition, the ASIC may be located in an access network device, a target network device or a core network device. Of course, the processor and the storage medium may also exist in the access network device, the target network device or the core network device as discrete components.

Those skilled in the art may realize that, in one or more abovementioned examples, all or part of the functions described in the embodiments of the disclosure may be realized through software, hardware or any combination thereof. During implementation with the software, the embodiments may be implemented completely or partially in form of computer program product. The computer program product includes one or more computer instructions. When the computer program instruction is loaded and executed on a computer, the flows or functions according to the embodiments of the disclosure are completely or partially generated. The computer may be a universal computer, a dedicated computer, a computer network or another programmable device. The computer instruction may be stored in a computer-readable storage medium or transmitted from one computer-readable storage medium to another computer-readable storage medium. For example, the computer instruction may be transmitted from a website, computer, server or data center to another website, computer, server or data center in a wired (for example, coaxial cable, optical fiber, and digital subscriber line (DSL)) or wireless (for example, infrared, wireless, and microwave) manner. The computer-readable storage medium may be any available medium accessible for the computer or a data storage device, such as a server and a data center, including one or more integrated available media. The available medium may be a magnetic medium (for example, a floppy disk, a hard disk, and a magnetic tape), an optical medium (for example, a digital video disc (DVD)), a semiconductor medium (for example, a solid state disk (SSD)) or the like.

Each module/unit of each apparatus and product described in the above embodiments may be a software module/unit or a hardware module/unit or may be a software module/unit in part, and a hardware module/unit in part. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

The abovementioned specific implementations further describe the purposes, technical solutions and beneficial effects of the embodiments of the disclosure in detail. It is to be understood that the above is only the specific implementation of the embodiments of the disclosure and not intended to limit the scope of protection of the embodiments of the disclosure. Any modifications, equivalent replacements, improvements and the like made on the basis of the technical solutions of the embodiments of the disclosure shall fall within the scope of protection of the embodiments of the disclosure.

## Claims

1. A method for signal processing, comprising:
determining validity of a reference signal, or determining a transmission periodicity of the reference signal.

2. The method of claim 1, wherein determining validity of the reference signal comprises:
determining that a reference signal after a first time interval is valid, wherein a start time of the first time interval is a start-up time of a drx-on duration timer, and a duration of the first time interval is a preset duration.

3. The method of claim 2, wherein the reference signal is a non-periodic reference signal.

4. The method of claim 1, wherein determining validity of the reference signal comprises:
determining that a reference signal in an active time is valid; and
determining that a reference signal outside the active time is invalid.

5. The method of claim 1, wherein determining the transmission periodicity of the reference signal comprises:
determining that a transmission periodicity of a reference signal in an active time is a first period; and
determining that a transmission periodicity of a reference signal outside the active time is a second period.

6. The method of claim 1, wherein determining validity of the reference signal or determining the transmission periodicity of the reference signal comprises:
in response to receiving a wake-up indication indicating not to wake up, determining that a reference signal in a duration indicated by a drx-on duration timer is valid, or determining that a transmission periodicity of the reference signal in the duration indicated by the drx-on duration timer is a first period.

7. The method of claim 1, wherein determining validity of the reference signal or determining the transmission periodicity of the reference signal comprises:
in response to not receiving a wake-up indication and being configured with a first high-level parameter with a value being a first value, determining that a reference signal in a duration indicated by a drx-on duration timer is valid, or determining that a transmission periodicity of the reference signal in the duration indicated by the drx-on duration timer is a first period.

8. The method of claim 1, wherein determining validity of the reference signal comprises:
determining that a reference signal in a first time window is valid; and
determining that a reference signal outside the first time window is invalid.

9. The method of claim 1, wherein determining the transmission periodicity of the reference signal comprises:
determining that a transmission periodicity of a reference signal in a first time window is a first period; and
determining that a transmission periodicity of a reference signal outside the first time window is a second period.

10. The method of claim 8 or 9, wherein a period and an offset of the first time window are indicated by a second high-level parameter.

11. The method of any one of claims 4 to 9, wherein the reference signal is a periodic reference signal.

12. The method of any one of claims 1 to 9, wherein the reference signal is a synchronization signal/physical broadcast channel block (SSB), a channel state information-reference signal (CSI-RS), or a positioning reference signal (PRS).

13. The method of claim 12, wherein the CSI-RS comprises a tracking reference signal (TRS).

14. A method for channel processing, comprising:
determining validity of a physical downlink shared channel (PDSCH), or determining a transmission periodicity of the PDSCH.

15. The method of claim 14, wherein determining validity of the PDSCH comprises:
determining that a PDSCH in an active time is valid; and
determining that a PDSCH outside the active time is invalid.

16. The method of claim 14, wherein determining the transmission periodicity of the PDSCH comprises:
determining that a transmission periodicity of a PDSCH in an active time is a third period; and
determining that a transmission periodicity of a PDSCH outside the active time is a fourth period.

17. The method of claim 14, wherein determining validity of the PDSCH comprises:
determining that a PDSCH in a second time window is valid; and
determining that a PDSCH outside the second time window is invalid.

18. The method of claim 14, wherein determining the transmission periodicity of the PDSCH comprises:
determining that a transmission periodicity of a PDSCH in a second time window is a third period; and
determining that a transmission periodicity of a PDSCH outside the second time window is a fourth period.

19. The method of claim 17 or 18, wherein a period and an offset of the second time window are indicated by a third high-level parameter.

20. The method of any one of claims 14 to 18, wherein the PDSCH is a semi-persistent scheduling (SPS) PDSCH.

21. A communication apparatus, comprising a processor, a memory, and a computer program or instructions stored in the memory, wherein the processor is configured to execute the computer program or the instructions to implement operations of the method of any one of claims 1 to 20.

22. A chip, comprising a processor, wherein the processor is configured to execute operations of the method of any one of claims 1 to 20.

23. A chip module, comprising a communication module, a power module, a storage module, and a chip, wherein the power module is configured to supply power to the chip module, the storage module is configured to store data and instructions, the communication module is configured for internal communication of the chip module or for communication between the chip module and external devices, and the chip is configured to execute operations of the method of any one of claims 1 to 20.

24. A computer-readable storage medium, storing a computer program or instructions which, when executed, implements operations of the method of any one of claims 1 to 20.
